# EUROPEAN PATENT APPLICATION

(11) **EP 2 357 765 A1**
(43) Date of publication of application: **17.08.2011**
(21) Application number: 10153117.6
(22) Date of filing: 09.02.2010
(51) Int. Cl.: H04L 12/58, H04L 29/08

(54) **Socket SMTP load balancing**

(71) Applicant: Sheer, Paul, East Finchley London N20AB (GB)
(72) Inventor: Sheer, Paul, East Finchley London N20AB (GB)

(57) **Abstract**

A method is provided for load balancing SMTP, POP, and IMAP traffic over a plurality of backend SMTP, POP, and IMAP servers for sites that host a large number of electronic mail accounts. The method allows the total set of hosted mail accounts to be divided into subsets, where each subset is handled by one or more backend servers. The method ensures that each SMTP, POP, or IMAP connection is directed to a backend server that handles the subset to which the recipient email address associated with the connection is assigned. This method includes algorithms to interpret incoming SMTP, POP and IMAP connections in such a way as to identify the recipient(s) and establish corresponding connections to backend server(s) while giving the appearance (to the connecting party) of connecting directly to a backend server.

## Description

### BACKGROUND OF THE INVENTION

### 1. The Field of the Invention.

The present invention relates to means or steps for apportioning resources to one or more computers on a network. More specifically, the present invention relates to systems and methods used to distribute email (electronic mail) delivery and retrieval over a number of email servers in order to reduce the load of traffic to/from individual email servers, and/or systems and methods to scale email hosting environments to handle larger amounts of email and larger numbers of mail boxes with lower resource consumption and/or lower latency and/or higher throughput.

### 2. The Prior State of the Art

An organization that deploys an email solution will usually support at least one or more of the following services: a system to receive incoming email deliveries from an outside email server and store them for retrieval; a system to allow retrieval from storage; and a system to relay outgoing email on behalf of senders. The storage pertaining to an individual recipient is called a "mail box".

The Internet standard protocol for delivering email is called the Simple Mail Transfer Protocol (SMTP) primarily defined in IETF document RFC 5321. The Internet standard protocol by which recipients usually retrieve email from storage is the Post Office Protocol (POP) and/or the Internet Message Access Protocol (IMAP) primarily defined in IETF documents RFC 1939 and RFC 3501 respectively. Both these protocols are usually implemented by a single commodity computer server such that all email is received by that email server, stored within that one email server's storage media, and retrieved from the same email server by the recipient. In many cases, that email server may have redundant replication of the storage and/or standby email servers to mitigate a failure of the email server.

A large organization will typically be required to diverge from the herein described single commodity computer server system when they reach upwards of 1,000, 10,000, or 100,000 mail boxes due to unfavorable latency and throughput, and/or poor stability.

To introduce improved scalability to the deployment scenario of a single commodity computer server system, a common method is to deploy a plurality of email servers using DNS (Domain Name System) load balancing to share the load of incoming email. This is implemented by advertising more than one DNS resource record for the provided mail service. An outside SMTP client trying to initiate an SMTP delivery to the service will thereby pick one email server from among the plurality of email servers. These multiple email servers would then share the same contiguous single storage device (such as an NFS file-system, fiber channel SAN, or other shared file-system). The subsequent operation of using POP/IMAP to retrieve email, likewise chooses from one or more email servers that have access to the same shared storage device. A variation of such a system is U.S. Pat. Appl. No. 9,746,952 (Fodor). This deployment scenario has the disadvantage that the throughput of the system as a whole is greatly dependent on the throughput of the shared storage device, which may suffer from a many-to-many thrashing effect, network bandwidth limits, or other general throughput deficiencies. These problems are exacerbated by adding more email servers. A further problem occurs in the common case of attempting to implement a spam-filtering or virus-filtering method on the email server: multiple servers may be required to share data, incurring further computation overhead.

Another method to achieve scalability is to divide the set of email addresses into sub-domains. For instance, rather than hosting a large number of emails *adam@org.us* through *zach@org.us* (all with the same domain portion of the email address, *@org.us),* instead, the organization could name emails by department, such as *adam@ny.org.us, henry@ca.org.us, zach@nc.org.us,* etc. Email servers can thereby be deployed such that each email server hosts a subset of emails of one department. This method compromises on flexibility, and requires migration. This method does not work for an organization such as an ISP (Internet Service Provider) that wishes to use the same domain for all subscriber email accounts.

The state of the art also includes various combinations of deployment scenarios. Some of these deployment scenarios make use of the method of forwarding email between email servers. The method of forwarding email follows the steps of accepting delivery of the email and storing the entirety of the email within storage media (volatile or otherwise), and then retrieving the email from the storage media, and then delivering the email to another server, in a manner such as to apportion workload. The intermediate step of storing the entirety of the email incurs the disadvantage of consuming substantial computing resources. Systems that include within their methods such forwarding are U.S. Pat. No. 7,272,662 (Chesnais) and U.S. Pat. Appl. No. 10,278,824 (Fenton). These systems do not attempt to address the herein described disadvantage, nor do they solve the problem of interpreting the SMTP session in such a way as to redirect the session based on the recipient email address.

In terms of generic load balancing of client connections, there are a number of popular methods. These methods are mostly employed for web traffic, that is, the HTTP protocol, but can also be applied to SMTP, POP, and IMAP. Generic load balancing intercepts the data from the client and directs it to a machine from among the plurality of server machines sharing load. See for example U.S. Pat. No. 6,473,802 (Masters), U.S. Pat. No. 6,182,139 (Brendel), U.S. Pat. No. 6,128,279 (O'Neil), or U.S. Pat. No. 6,772,211 (Lu). The load balancer may interpret and/or modify the data in passing. In particular, some load balancers interpret the initial portion of the data of a new connection and direct the connection to a machine of choice. For example, for the HTTP protocol, the load balancer would intercept the cookie header which may contain information indicating to which machine the connection should be directed. However the state of the art does not include load balancers that are able to adequately interpret email handling protocols in order to choose the backend machine in a manner that allows subdivision of mail boxes into smaller sets; nor do so such that each load sharing machine handles only a smaller set of mail boxes. This subdivision in conjunction with session redirection is a principle advantage of the present invention.

### SUMMARY AND OBJECTS OF THE INVENTION

The problems in the prior state of the art have been successfully overcome by the present invention which is directed to systems and methods for load balancing SMTP, POP and IMAP sessions over a plurality of email servers such that a POP/IMAP retrieval session pertaining to a recipient will be directed to the same server to which an SMTP delivery operation from an outside email server was previously directed for the same recipient.

The present invention utilizes methods for delivering and retrieving email defined in RFC 5321, RFC 1939 and RFC 3501, incorporated herein by reference.

The present invention utilizes the method that a plurality of email servers are deployed, and that each email server has a distinguishing designator, and that each email address has assigned to it at least one of these designators, and that such assignments are stored in a database, and that each email server be ready to accept email for those email addresses assigned with its designator.

The email database may also store alias email address information necessary for performing email address substitutions and list expansions as may be required by the recipients' communication needs. The manner of alias email addresses is well known to those skilled in the art.

The email database may also store secret passwords and identifying tokens required for authentication, such that there is a mapping between recipient email addresses and identifying tokens. It may store a secret password for each identifying token.

An email delivery operation may begin with an outside email server initiating a connection to the organization's hosting SMTP server. By the methods of the present invention this SMTP server may be substituted by the herein described load balancer. The load balancer performs the methods of SMTP handshaking as defined by RFC 5321 up to the point of receiving the SMTP command "RCPT". Before replying to "RCPT", the load balancer may extract the recipient email address from the "RCPT" line of command, and perform a look-up from the email database, to determine if the recipient email address is indeed an email address for which the organization hosts email (i.e. a "local" email address), as well as retrieve the designator(s) with which it has been assigned, as well as perform any list expansions or address substitutions, as well as look up their respective designators, in a recursive fashion, etc.

The load balancer may then resolve all designators to their actual email server identifiers and attempt to make a connection to each relevant email server. The load balancer may then perform the methods of SMTP handshaking as defined by RFC 5321 mimicking the same "MAIL" line of command, and issuing all necessary "RCPT" commands. If all "RCPT" commands to all email servers result in successful SMTP reply codes then the load balancer may reply with a successful SMTP reply code to the outside email server. If a single "RCPT" command to an email server does not result in a successful SMTP reply code then the load balancer may reply with a failed SMTP reply code to the outside email server.

The outside email server will possibly send more "RCPT" commands which may be handled in the same way, preferably reusing connections to email servers.

Those skilled in the art will be aware that most email deliveries are to a single recipient and therefore the load balancer is likely to require a connection to only one email server for an individual email delivery.

The outside email server may send a "DATA" command, and the load balancer my mimic a "DATA" command to each of the email servers to which it is connected. Once again, if any one email server returns a failure SMTP reply code, the load balancer may return a failure SMTP reply code to the outside email server.

The outside email server may begin to send the email. The load balancer may receive the email in chunks related to the TCP "packetization" of the data stream. After receiving a chunk, the load balancer may write the chunk in full to each of the email servers to which it is connected before proceeding to receive the next chunk. If any single chunk fails to write in full to an email server then that email transaction may be considered to have failed and an appropriate failure reply code may be returned to the outside email server.

Each email server may respond with a reply code. If all such reply codes indicate successful delivery, a success reply code may be returned to the outside email server. The possibility exists that not all email servers give the same reply, meaning that one or more servers have accepted the email whereas one or more other servers have rejected the email. In this case the failure reply code may be of the form indicating that the outside email server should not attempt a subsequent delivery for the same email. (If the load balancer imposes a size limit on the email data, and that limit is smaller than that of any of the email servers, then the herein described scenario of differently replying email servers is unlikely to occur. That this unexpected outcome is empirically true is one of the reasons that the present invention is non-obvious.)

If required, the outside email server may continue an additional "MAIL" command, thus repeating the preceding steps.

In this way, the outside email server is given the appearance of performing SMTP command interactions directly with the email server. The email server is given the appearance of performing SMTP command interactions with an outside email server. Both are given the appearance of a sufficiently standards-compliant SMTP session according to the methods of the SMTP standard RFC 5321 (or other versions of the standard).

An advantage of the present invention is that the complete email data are not stored on the load balancer, the storage of which would impart additional computational burden on the load balancer. Such resources include consumption of persistent or volatile storage media, and/or consumption of rate of transfer or bandwidth to or from persistent or volatile storage media.

By the methods of the present invention, delivery failures due to unavailability of an email server, or failures due to policy reasons, or failures due to the recipient address being invalid, or failures due to other reasons, are reported to the outside email server early in the session; the onus being on the outside email server to retry or fail delivery if required by the SMTP protocol. This has the advantage of saving on network bandwidth by preventing the session from reaching the "DATA" command, and by obviating the need for bounce messages. State of the art email forwarding techniques queue all incoming email, which typically contains a large portion (sometimes 90% in practice) of undeliverable email messages, which therefore bounces and consumes computing resources.

The connection to the email server is described herein as taking place at the point in the sequence of commands directly after the arrival of the "RCPT" command from the outside email server. However, those skilled in the art will realize that some variation in the sequences of operation is viable and will have the same result. The example herein should not be construed to limit the scope of the invention.

By the methods of the present invention email will have been delivered to a backend server of the organizations choosing without incurring any intermediate queuing, storage or processing. The delivery is transparent to both the email server and the outside email server. This has the desirable property that the email servers can continue to use or license whichever SMTP software/hardware implementation the organization has previously deployed.

Further, spam filtering methods (such as Grey-Listing or Sender Policy Framework) can be implemented on the load balancer (at the point of receiving the "MAIL" and/or "RCPT" commands), with the advantage of a single Grey-Listing database, and the further advantage of protection of email servers from unwanted connections and denial-of-service attacks. Spam detection methods that require large amounts of computations (due to their in-depth analysis of email content) can take place on the email servers, with the advantage of apportioning the computational load.

For the retrieval of email by recipients, POP/IMAP clients may connect to the load balancer. The POP/IMAP client may try to authenticate itself to the load balancer using one of the authentication methods commonly used for POP/IMAP and known to those skilled in the art. The process of authentication may necessitate that an identifying token first be sent to the load balancer. The load balancer may then retrieve from the email database to obtain the recipient email address mapped to that identifying token and subsequently to obtain designator(s) to which the email address has been assigned.

The load balancer may then resolve all designators to their actual email server identifiers and attempt to make a connection to each relevant email server as though the load balancer were a POP/IMAP client. The next step of the authentication may involve cryptographic operations and/or the exchange of secret passwords. The load balancer may pass these secret passwords between the POP/IMAP client and the email server. In the case of authentication methods that involve cryptography such that the secret password cannot be extracted, the load balancer may retrieve the secret password from the email database, and make use of that secret password to authenticate the POP/IMAP client as well as to authenticate itself to the email server.

The identifying token may be identical to the recipient email address thus making trivial the mapping between the identifying token and the recipient email address.

Subsequent to the herein described connection and authentication steps, the load balancer may transparently forward data between the POP/IMAP client and the email server. According to the methods of the present invention the load balancer would have the appearance to the POP/IMAP client of communicating directly with the email server.

For the relaying (i.e. sending) of email by senders, SMTP clients may connect to the load balancer. The SMTP client may try to authenticate itself similar to the authentication of POP/IMAP clients herein described. Subsequent to the connection and authentication steps, the load balancer may transparently forward data between the SMTP client and the email server. According to the methods of the present invention the load balancer would have the appearance to the SMTP client of communicating directly with the email server. The email server may then proceed to queue the email for outgoing delivery.

The advantage of using the load balancer for sending email as herein described is so that white lists or associations between senders (reverse path email addresses) and recipients can be gathered or stored by the load balancer and assist in spam filtering. Systems and methods for employing such white lists or associations in spam filters are well known to those skilled in the art.

A further advantage of the present invention is with regard to email interception and replication. Certain jurisdictions require that email systems have the capability to intercept and archive email so that in the event of a legal court order to perform interception or archival for particular recipients, those email systems are able to do so forthwith. The addition of an address expansion or alias in the email database would result in an additional email delivery, potentially to a dedicated email server, which would serve this purpose. Further, and in general, because all email passes through the load balancer, interception of email is simplified. The present invention therefore has the advantage that it simplifies an organizations methods to comply with local law pertaining to email interception and/or archival.

### BRIEF DESCRIPTION OF THE DRAWINGS

In order that the manner in which the above-recited and other advantages and objects of the invention are obtained, a more particular description of the invention briefly described above will be rendered by reference to specific embodiments thereof which are illustrated in the appending drawings. Understanding that these drawings depict only typical embodiments of the invention and are not therefore to be considered limiting of its scope, the invention will be described and explained with additional specificity and detail through the use of the accompanying drawings in which:

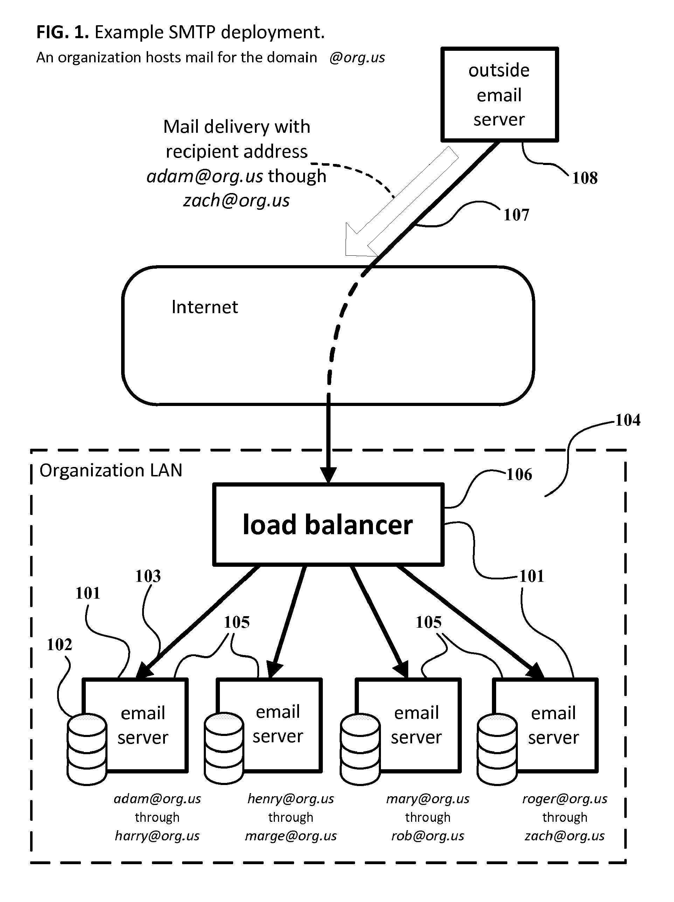

**FIG 1** is an example of a suitable deployment of the present invention showing connections between components of the system for an SMTP delivery.

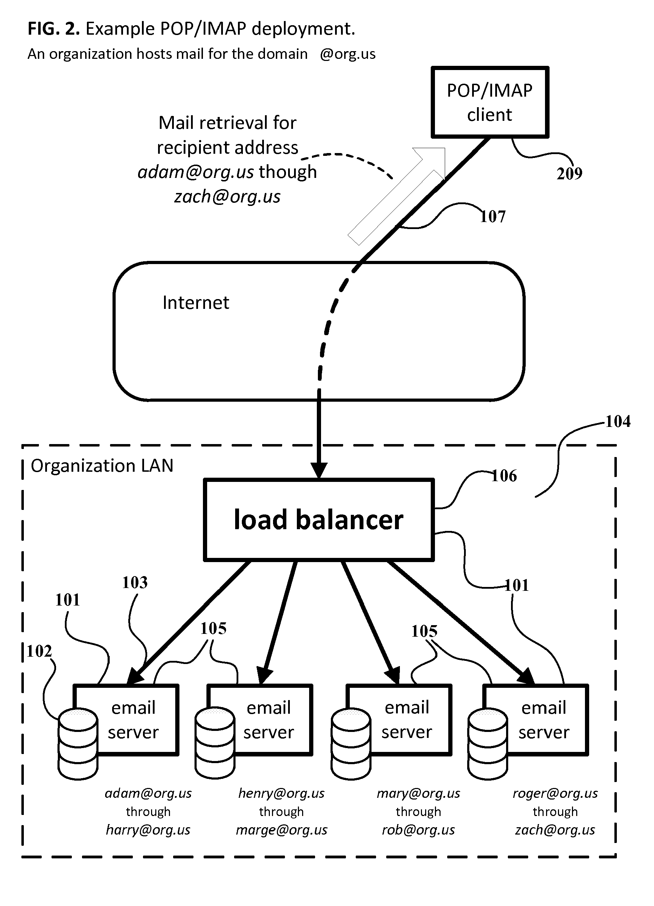

**FIG 2** is an example of a suitable deployment of the present invention showing connections between components of the system for POP/IMAP retrieval.

**FIG 3** is an example of a sequence diagram of selected SMTP commands of the SMTP protocol, by the methods of the present invention, for the delivery of email from an outside email server to an email server.

**FIG 4** is an example of the same as **FIG 3** wherein further selected commands are shown.

**FIG 5** is an example of a sequence diagram of selected POP/IMAP steps of interaction, by the methods of the present invention, for the retrieval of email by a POP/IMAP client.

**FIG 6** is an example of a sequence diagram of selected SMTP steps of interaction, by the methods of the present invention, for the relaying of email by an SMTP client.

### DETAILED DESCRIPTION OF THE PREFERRED EMBODIMENTS

The invention is described below by using diagrams to illustrate the processing of embodiments used to implement the systems and methods of the present invention. Using the diagrams in this manner to present the invention should not be construed as limiting its scope. The present invention contemplates both methods and systems for the load balancing of email retrieval and delivery. The embodiments of the present invention may comprise a special purpose or general purpose computer comprising various computer hardware as discussed below.

Embodiments within the scope of the present invention also include computer systems **101** having persistent storage media **102,** volatile storage media, executable instructions, and network communication links. By way of example and not limitation, such computing systems may be a general purpose microprocessor-based computer with a hard-disk or solid-state-disk storage media, a Local Area Network **104** (LAN) or Wide Area Network (WAN) network communication device, and there may be a plurality of these computing systems deployed to allow network communications between them.

The computer systems may implement the network communication protocols of the Internet Protocol (IP) and of the Transmission Control Protocol (TCP), and may be able to operate as a node within the Internet and/or a LAN. The computer systems may implement communication between one another using connections based on TCP and accept incoming connections or initiate outgoing connections. The computing systems may be installed with general-purpose operating systems such as Microsoft Windows, or operating systems conforming to the POSIX standard, or Unix-like operating systems, or other general purpose operating systems, or embedded or special-purpose operating systems. The computer systems may have general purpose functions for mapping data items to data keys in the manner of a database and persistently storing these mappings as well as allowing insertions, updates and deletions of mappings.

The email servers **105** may contain executable instructions that implement the protocols of SMTP, POP or IMAP. By way of example and not limitation, these executable instructions may be in the form of general-purpose email handling software.

The email handling software may have a local persistent store of a set of recipient email addresses for which the computer system is prepared to accept incoming mail messages by way of the SMTP protocol, as well as a mailbox store for each recipient to hold delivered mail messages. The email handling software may be prepared to allow retrieval of mail messages from the mailbox store by outside computer systems using the POP or IMAP protocols. The email handling software may implement an authentication mechanism to validate the authenticity of incoming POP or IMAP connections. The authentication mechanism may allow only outside computer systems that are in possession of per-recipient secret information, such as a password or key, to allow retrieval of mail.

Each backend server's set of recipient email addresses may be a subset of the total of all recipient email addresses hosted by the embodiment. The backend server's set of recipient email addresses may overlap that of another backend server.

At least one of the computer systems, the load balancer **106,** shall implement the method of accepting incoming connections from outside email servers **108** and outside POP/IMAP clients **209,** and making connections **103** to email servers. SMTP, IMAP, and POP commands and replies may be passed along a session **107** between the outside clients/servers and the load balancer. SMTP, IMAP and POP commands may be passed between the load balancer and the backend servers. The load balancer may hold connections open to the outside clients/servers while at the same time holding a connection open to the backend servers, and may relay commands and replies between the backend servers and the outside clients/servers. The relay of commands and replies may involve duplication or alteration.

The load balancer may have access to an email database. In the preferred embodiment of the invention the email database may be stored within the load balancer on a persistent storage media and/or in a volatile storage media, the latter possibly for reasons of performance. The database may also be stored remotely and be accessible to the load balancer in such a manner as is familiar to those skilled in the art. By way of example and not limitation, in the preferred embodiment of the invention, the load balancer may have an in-memory hash-table of all hosted email addresses and identifying tokens, associated to any data that may be required as herein described in terms of "database" and "look up".

The DNS service pertaining to the domain part of all email addresses in the herein described database may be configured with MX (Mail Exchanger) records pointing to the load balancer.

By way of example and not limitation, the preferred embodiment herein described may include a connection-oriented software implementation which can accept incoming connections and initiate outgoing connections. The connections may, by way of example, be TCP/IP connections, and may be accessible through an Application Programming Interface (API), which may be the Berkeley Socket API, the Windows Socket API, or other API. The connections require handling in a concurrent fashion so that a plurality of sessions of email retrieval and/or delivery are handled concurrently; such being familiar to those skilled in the art. Such concurrent handling may be implemented using a multi-threaded programming model, an event-based state-machine programming model, a cooperative threading programming model, or other programming model, or a programming model that is a combination of one or more of those herein described. Because some programming models may be better suited to handle very large numbers of concurrent connections, the programming model may be thusly chosen, however the invention is not limited to a specific programming model.

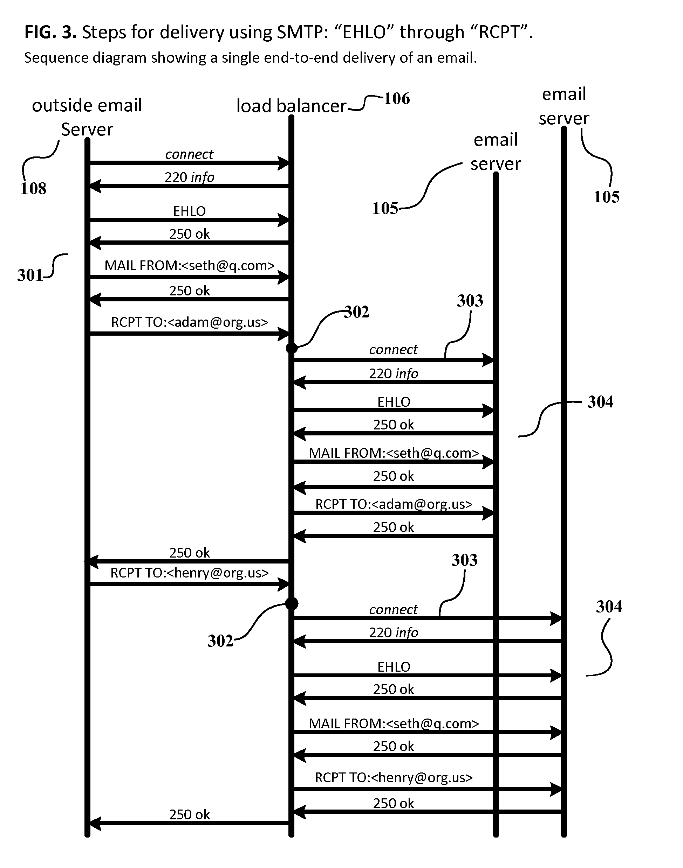

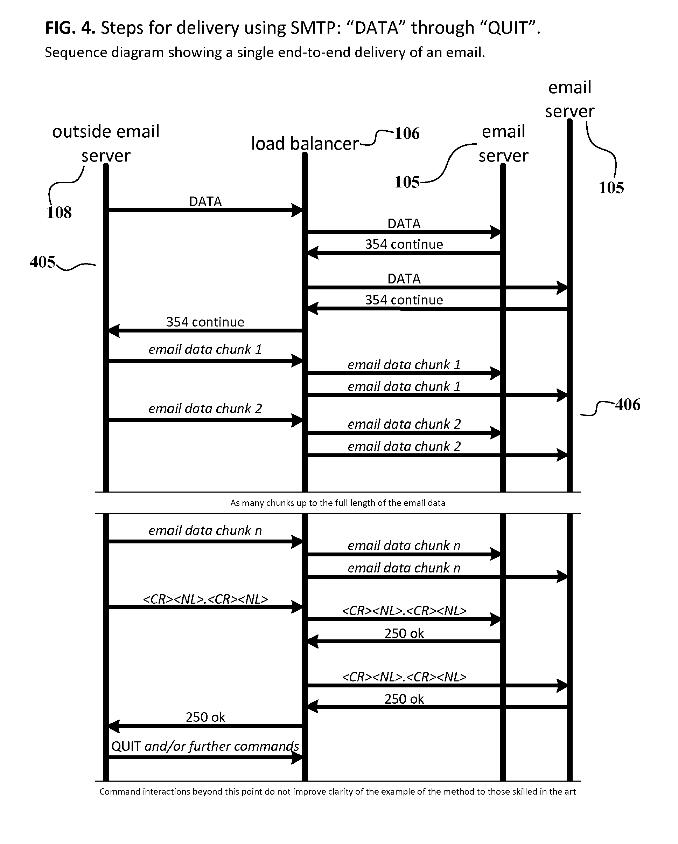

In the preferred embodiment of the invention the load balancer may send commands, by way of example, according to the sequence shown in FIG. 3 and FIG. 4.

The load balancer may interact with the outside email server according to part of the interactions **301** of the SMTP protocol. Herein the terms "220", "EHLO", "250", "MAIL FROM", and "RCPT TO" are familiar to those skilled in the art.

The load balancer may look up **302** from the database, the email server designator corresponding to the recipient email, and any alias expansions and associated email addresses as well as their respective email server designators, in a recursive fashion. The load balancer will then connect **303** to the email server corresponding to the designator.

The load balancer may interact with the email server according to the interactions **304** of the SMTP protocol. Herein the terms "220", "EHLO", "250", "MAIL FROM", and "RCPT TO" are familiar to those skilled in the art. If a failure reply code is returned by the email server, then the same failure reply code may be returned by the load balancer to the outside email server. There is one case, however, where the same reply code may not be sent: if an error reply code is returned by the email server in response to a "RCPT TO" where the same email server has previously returned a success reply code in response to a prior "RCPT TO". For this exception a "5yz" response code may be substituted in order to prevent duplicate deliveries.

The load balancer may interact with the outside email server according to the remainder of the interactions **405** of the SMTP protocol. Herein the terms "DATA" and "354" are familiar to those skilled in the art. In order to ensure that all email servers receive the complete email data, the load balancer may perform the interactions **406** of fully transmitting each chunk to all email servers before proceeding to receive the next chunk. The first chunk may be prepended with a "Received:" header for compliance with the SMTP protocol.

The steps herein may be repeated as required by the outside email server.

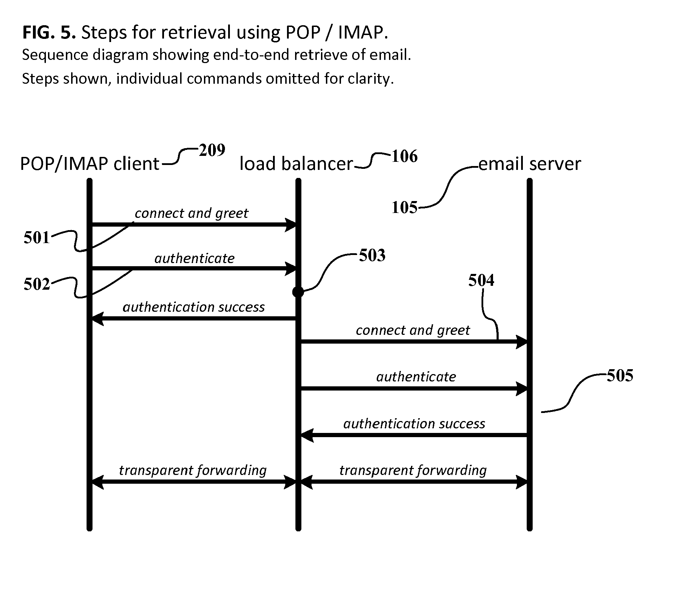

In the preferred embodiment of the invention the load balancer may additionally send groups commands, by way of example, according to the sequence shown in FIG. 5.

The POP/IMAP client may connect **501** and authenticate **502** itself to the load balancer using one of the methods of authentication well known to those skilled in the art. This includes, by way of example, the authentication methods of APOP, LOGIN, NTLM, or CRAM-MD5.

The load balancer may look up **503** from the database, the email server designator corresponding to the identifying token of the authentication step, and then connect **504** to the corresponding server. In the preferred embodiment of the invention the identifying token is mapped to the recipient's email address or is identical to the recipient's email address.

The load balancer may interact **505** with the email server according to the interactions of the POP/IMAP protocol.

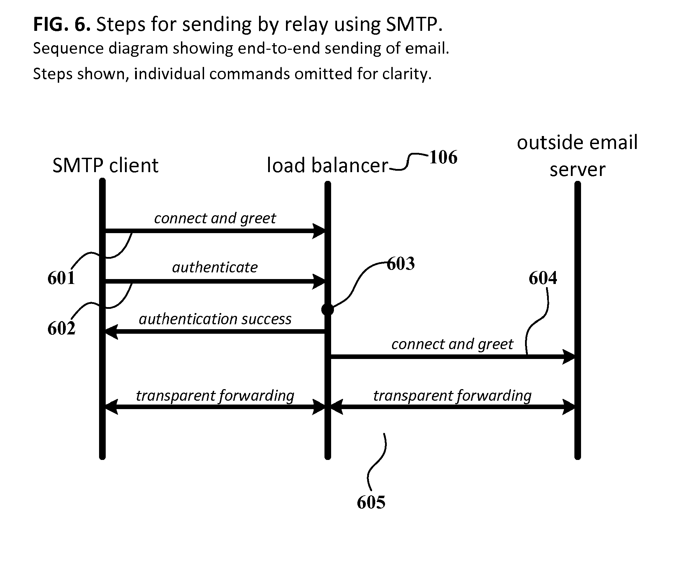

In the preferred embodiment of the invention the load balancer may additionally send groups commands, by way of example, according to the sequence shown in FIG. 6.

The SMTP client may connect **601** and authenticate **602** itself to the load balancer using one of the methods of authentication well known to those skilled in the art. This includes, by way of example, the authentication methods of PLAIN, LOGIN, NTLM, or CRAM-MD5.

The load balancer may look up **603** from the database, the email server designator corresponding to the identifying token of the authentication, and then connect **604** to the corresponding server. In the preferred embodiment of the invention the identifying token is mapped to the sender's email address (reverse path email address) or is identical to the sender's email address.

The load balancer may transparently forward **605** data between the SMTP client and the email server.

The preferred embodiment herein described, refers to the SMTP client as authenticating itself using an authentication method that employs an identifying token. Such authentication may be dispensed with if the IP address of the SMTP client is within the realm of IP addresses allowed to relay mail. In this case, instead of an identifying token, the sender email address (reverse path email address) may be used to look up the email server designator from the database. The remainder of the interactions proceed similarly forthwith.

The preferred embodiment herein described refers to "SMTP" but should not be construed as limiting the scope of the invention to this protocol only. Other protocols that enable the delivery of email, as well as protocols based on SMTP, or protocols that are refinements or extensions to SMTP are also included within the scope of the invention.

The preferred embodiment herein described refers to "POP/IMAP" but should not be construed as limiting the scope of the invention to these two protocols only. Other protocols that enable the retrieval of email, as well as protocols based on POP or IMAP, or protocols that are refinements or extensions to POP or IMAP are also included within the scope of the invention.

The preferred embodiment may include a plurality of computer systems each a load balancer. All load balancers may be listed as DNS MX records for all relevant domains. Outside SMTP connections may then choose a load balancer from the set of relevant MX records in such a way as to avoid those that are unavailable due to failure. This embodies a multiply redundant service, tolerant to failures of individual load balancer computer systems. Both embodiments employing a single load balancer as well as embodiments employing a plurality of load balancers, are included within the scope of the present invention.

## Claims

1. A system for distributing email deliveries over a plurality of email servers comprising the steps of:
intercepting the email delivery session;
identifying email recipients within the email delivery session;
resolving email recipients to corresponding email servers that are prepared to accept delivery for those recipients; and
replicating, possibly with modification, the email delivery session toward the corresponding email servers;
wherein the email delivery sessions are processed in an overlapping fashion such that only discrete parts of the email message data are at any one time stored or known to the intercepting component of the system.

2. The method of claim 1, further comprising the step of expanding identified email recipients into a plurality of alias email recipients, wherein the system then proceeds according to the steps for each.

3. A system for distributing email retrievals over a plurality of email servers comprising the steps of:
intercepting the authentication step of the email retrieval session;
identifying the email recipient from the authentication tokens;
resolving the email recipient to a corresponding email server that is prepared to accept retrieval by that recipient; and
replicating, possibly with modification, the email retrieval session toward the corresponding email server;
wherein the email retrieval sessions are processed in an overlapping fashion such that only discrete parts of the email message data are at any one time stored or known to the intercepting component of the system.

4. The method of claim **3** further comprising the limitation that, for each recipient, the email retrieval session is replicated to the same email server as would an email delivery session for the same recipient.

5. A system for distributing email deliveries for authorized senders over a plurality of email servers comprising the steps of:
intercepting the email delivery session;
identifying the email sender within the email delivery session;
resolving the email sender to a corresponding email server that is prepared to relay the delivery for that sender; and
replicating, possibly with modification, the email delivery session toward the corresponding email server;
wherein the email delivery sessions are processed in an overlapping fashion such that only discrete parts of the email message data are at any one time stored or known to the intercepting component of the system.

6. The method of claim **5** further comprising the limitation that, for an email sender, the email delivery session is replicated to the same email server as would the email delivery session of the same email recipient.
